# EUROPÄISCHE PATENTSCHRIFT

(11) **EP 1 433 124 B1**
(45) Veröffentlichungstag und Bekanntmachung des Hinweises auf die Patenterteilung: **05.10.2005**
(21) Anmeldenummer: 01983564.4
(22) Anmeldetag: 23.10.2001
(51) Int. Cl.: G06K 17/00

(54) **Drucker zum Aufbringen von Zielinformationen auf Etiketten in gedruckter und elektronischer Form, sowie Anhänger mit RFID Etikette und bedrucktem Etikette, und entsprechendes Verfahren zur Kennzeichnung von Gegenständen**
Printer for applying destination information on labels in printed and electronic form, tag comprising RFID label and printed label, and corresponding method for labelling an object
Imprimante pour appliquer sur des étiquettes des informations de destination d'un façon imprimé et éléctronique, support avec une étiquette d'identification par radiofréquence et une étiquette imprimée, et un procédé correspondant pour caractériser des objets

(30) Priorität: 23.10.2000 DE 10052444
(43) Veröffentlichungstag der Anmeldung: 30.06.2004
(73) Patentinhaber: AVERY DENNISON CORPORATION, California 91103 (US)
(72) Erfinder: LA COUR SOEBORG, Jens, 8900 Randers (DK)
(74) Vertreter: Fritsche, Rainer
(86) Internationale Anmeldenummer: PCT/EP2001/012250
(87) Internationale Veröffentlichungsnummer: WO 2002/035463

(56) Entgegenhaltungen:
- EP-A- 0 851 377
- EP-A- 0 986 020
- WO-A-96/36937
- DE-A- 19 705 038
- DE-A- 19 749 702
- DE-A- 19 851 836
- US-A- 3 679 874
- US-A- 4 991 338
- US-A- 5 217 056
- US-A- 5 793 305

## Beschreibung

Die vorliegende Erfindung betrifft einen Drucker zum Erstellen von zumindest Etiketten als Zielinformationsträger für einen zu transportierenden Gegenstand, insbesondere ein Gepäckstück, sowie einen Anhänger, ein System und ein Verfahren hierfür gemäß den Ansprüchen 1, 7, 19, und 24.

Bei dem automatisierten Versenden von Gegenständen, insbesondere Gepäckstücken stellt sich das Problem, diese mit einer Information über den jeweiligen Zielort zu versehen. Gepäckstücke, die beispielsweise von Flugreisenden mitgeführt und nicht innerhalb der Kabine eines Flugzeuges verstaut werden können, werden beim Einchecken abgegeben. Hierbei muß dann jedes einzelne Gepäckstück mit einer Information hinsichtlich des Zielortes des Flugreisenden und damit des Gepäckstückes versehen werden. Hierzu wird nach Eingabe des Tickets ein Etikette in Form eines länglichen Streifens mittels eines geeigneten Druckers bedruckt, wobei die Zielinformation sowohl uncodiert in Klartext mittels Abkürzungen als auch codiert in Form eines Barcodes aufgedruckt wird. Dieses Etikette wird dann an dem Gepäckstück befestigt, meist dadurch, daß es durch den Handgriff hindurch geführt und an seinen beiden freien Enden, an denen es mit einer Klebeschicht versehen ist, miteinander verklebt wird. Anschließend wird das Gepäckstück mittels einer geeigneten Fördereinrichtung zu dem jeweiligen Flugzeug transportiert. Da das Fördersystem mehrere Weichen und Abzweigungsstellen aufweist, muß das Gepäckstück an den Weichen, insbesondere hinsichtlich des Zielortes identifiziert werden, damit die Weichen eine entsprechende Stellung einnehmen können. Hierzu sind in dem Fördersystem an verschiedenen Stellen Barcode-Scanner vorgesehen, die den mittels des Druckers erstellten Barcode erfassen können. Hierbei stellt sich jedoch häufig das Problem, daß der Barcode aufgrund einer ungünstigen Anbringung des Etikettes an dem Gepäckstück und/oder wegen einer Verschmutzung des Etikettes oder des Scanners nicht richtig erfaßt werden kann. Dies führt dazu, daß das Gepäckstück fehlgeleitet wird, wodurch das Gepäckstück mit hohem Aufwand dem Eigentümer zurück gebracht werden muß.

Aus der WO 96/36 937 geht ein Drucker zum Beschreiben und Bedrucken ein und desselben aktiven RFID-Etiketts hervor. Dieses RFID-Etikett ist mit einer Batterie als Energiequelle für den Informationsübertragungsvorgang versehen und wird an beispielsweise an einem Handgriff eines Gepäckstückes für den einmaligen Gebrauch angebracht. Auf einer Seite des RFID-Etiketts, die von der Batterie abgewandt ist, kann ein Aufdruck aufgebracht werden. Nachdem das Gepäckstück den Bestimmungsort erreicht hat, wird das RFID.Etikett von diesem Gepäckstück abgenommen. Aus dem US-Patent 4,991,338 geht ein Anhänger hervor, der an Schutzhüllen für Köpfe von

Golfschlägem angebracht werden kann. Dieser Anhänger ist in der Lage, mehrere gleichwertige bedruckte Etiketten austauschbar aufzunehmen.

Es ist Aufgabe der vorliegenden Erfindung, die vorstehend erwähnten Nachteile zu beseitigen und insbesondere einen Drucker zum Erstellen von zumindest Etiketten als Zielinformationsträger für einen zu transportierenden Gegenstand, einen Anhänger hierfür, ein System hierfür sowie ein Verfahren hierfür zu schaffen, die ein zuverlässiges Identifizieren des Zielortes ermöglichen.

Hinsichtlich des Druckers wird die vorstehende Aufgabe durch die Merkmale des Anspruchs 1 gelöst. In den sich daran anschließenden Ansprüchen 2 bis 6 finden sich vorteilhafte Ausgestaltungen hierzu.

Durch das Vorsehen eines Druckers, der sowohl in der Lage ist, ein RFID-Etikette zu beschreiben als auch ein "normales Etikette" zu bedrucken, welches wenigstens einen Teil der Zielinformation in codierter, beispielsweise durch einen Barcode, und/oder in uncodierter Form enthält, besteht die Möglichkeit, mit einem einzigen Gerät sowohl ein RFID-Etikette als auch ein normales Etikette mit der Zielinformation zu versehen.

Die Verwerdung des RFID-Etikettes ermöglicht, mittels vorzugsweise Radiowellen das Etikette zu beschreiben und dessen Informationen auszulesen. Ein derartiger Schreib- bzw. Lesevorgang ist unabhängig von der Lage des Etikettes zu der jeweiligen Lese- und/oder Schreibeinheit und ist darüber hinaus ebenfalls unabhängig von äußeren Einflüssen, wie Verschmutzung des Etikettes usw. Damit kann eine sichere Steuerung des zu transportierenden Gegenstandes an seinen Zielort, insbesondere bei den Fördersystemen, deren Weichen anhand des Etikettes und der darin enthaltenen Information gestellt werden, transportiert werden.

Da darüber hinaus ein RFID-Etikette mehrfach gelesen und beschrieben werden kann, besteht weiterhin die Möglichkeit, das RFID-Etikette an dem zu transportierenden Gegenstand nach dessen Erreichen des Zielortes zu belassen. Für den nächsten Transportvorgang kann dann dieses am Gegenstand bereits befindliche RFID-Etikette zum Eingeben der Zielinformationen verwendet werden. Erst wenn das RFID-Etikette einen Fehler aufweist, muß es gegen ein neues RFID-Etikette ausgetauscht werden.

In diesem Zusammenhang ist zu bemerken, daß unter Zielinformation bzw. Zielinformationen für einen zu transportierenden Gegenstand sowohl ein vollständiger Datensatz dieser Zielinformationen als auch Teile hiervon zu verstehen sind. Sind die Zielinformationen zu umfangreich, um sie beispielsweise auf ein einziges RFID-Etikette einzuschreiben, so kann ebenfalls vorgesehen sein, daß an dem zu transportierenden Gegenstand zwei oder mehr RFID-Etiketten vorgesehen sind, die die Zielinformationen jeweils teilweise enthalten. Weiterhin kann vorgesehen sein, daß neben den reinen Zielinformationen für den zu transportierenden Gegenstand weitere Informationen in das RFID-Etikette eingeschrieben bzw. von diesem gelesen werden können.

Sofern der zu transportierende Gegenstand bereits ein RFID-Etikette aufweist, das bei dem letzten Transportvorgang benutzt worden ist, ist es von Vorteil, wenn eine Schreib-/Leseeinheit für ein RFID-Etikette, vorzugsweise unabhängig von dem Drucker vorgesehen ist. Damit läßt sich überprüfen, ob das RFID-Etikette fehlerfrei ist oder ob es gegebenenfalls ausgetauscht werden muß. Im Falle eines Austausches oder einer Neuerstellung eines RFID-Etikettes ist es weiterhin von Vorteil, wenn der Drucker mit einer Leseeinheit für RFID-Etiketten versehen ist, um die Fehlerfreiheit des neuen bzw. unbeschriebenen RFID-Etikettes zu überprüfen. Hierzu hat es sich vorteilhaft erwiesen, wenn die Leseeinheit für ein RFID-Etikette in Zuführrichtung vor der Druckeinheit des Druckers angeordnet ist. In diesem Zusammenhang ist noch zu bemerken, daß die Leseeinheit für ein RFID-Etikette und die Schreibeinheit für ein RFID-Etikette entweder getrennt in dem Drucker oder aber in einer gemeinsamen Einheit zusammengefaßt vorgesehen sein können.

Neben einer Zuführeinrichtung für das RFID-Etikette und einer weiteren Zuführeinrichtung für das mittels der Druckeinheit zu bedruckende Etikette können weitere Zuführeinrichtungen vorgesehen sein, so daß der Drucker neben den beiden Etiketten auch weitere Dokumente erstellen kann, beispielsweise Dokumente, die unabhängig von dem zu transportierenden Gegenstand Verwendung finden.

Jede der Zuführeinrichtungen kann mit einer Vorratseinheit für jeweils eine Art eines zu bedruckenden Druckelementes bzw. zu beschreibendes RFID-Etikette verbunden sein. Hierdurch besteht die Möglichkeit, im Falle eines fehlerhaften RFID-Etikettes ein neues RFID-Etikette auszugeben. Die Vorratseinheiten können hierbei so ausgebildet sein, daß sowohl Druckmaterialien in Rollenform als auch in Einzeiblattform bzw. als zieharmonikaartig gefaltete Blöcke bzw. als Leporelloblöcke in dem Drucker angeordnet werden können.

Neben der Leseeinheit für RFID-Etiketten kann auch eine Leseeinheit für Smartcards an dem Drucker vorgesehen sein, um hierdurch andere Formen der Informationsübertragung bereitzustellen. Wird beispielsweise der erfindungsgemäße Drucker wiederum bei Flugreisen eingesetzt, so kann anstelle eines Tickets auch eine Smartcard Verwendung finden, deren bereits gespeicherten Flug-Informationen dann von dem Drucker gelesen und zum Beschreiben des RFID-Etikettes, sei es daß es sich bereits an dem zu transportierenden Gegenstand befindet, sei es daß es sich noch als unbeschriebenes RFID-Etikette im Drucker befindet, beschrieben werden, so daß eine automatische Informationsübertragung von der Smartcard zu dem RFID-Etikette erfolgt. Selbstverständlich kann die in der Smartcard enthaltene Information auch auf das erste und jedes weitere Etikette bzw. jedes weitere von dem Drucker zu erstellende Dokument übertragen werden. Es ist in diesem Zusammenhang zu bemerken, daß anstelle einer Leseeinheit für Smartcards auch eine Leseeinheit für andere in magnetisierter Form abgespeicherte Informationen vorgesehen sein kann, beispielsweise für Reisedokumente, die mit einem Magnetstreifen versehen sind, der die Reiseinformationen enthält.

In diesem Zusammenhang sei noch angemerkt, daß selbstverständlich neben einer Leseeinheit für Smartcards auch eine Schreibeinheit für Smartcards in dem Drucker vorgesehen sein kann.

Hinsichtlich des Anhängers wird die vorstehende Aufgabe durch die Merkmale des Anspruchs 17 gelöst. In den sich daran anschließenden Ansprüchen 8 bis 18 finden sich vorteilhafte Ausgestaltungen hierzu.

Durch das Vorsehen eines Anhängers an dem zu transportierenden Gegenstand besteht die Möglichkeit, das RFID-Etikette in geschützter Form, beispielsweise in einer ersten Aufnahmeeinrichtung des Anhängers, aufzunehmen und es an dem zu transportierenden Gegenstand nach einem ersten Transportvorgang zu belassen, bei dem vor dem Transportvorgang oder während des Transportvorgangs das RFID-Etikette an dem zu transportierenden Gegenstand angebracht worden ist. Darüber hinaus ermöglicht der Anhänger die Aufnahme beispielsweise eines weiteren Etikettes, welches wenigstens einen Teil der Zielinformation in gedruckter, codierter und/oder uncodierter Form enthält. Dieses Etikette wird in einer zweiten Aufnahmeeinrichtung aufgenommen.

Da die in einem RFID-Etikette enthaltene Information mittels Radiowellen von und zu dem RFID-Etikette übertragen wird, ist es nicht notwendig, das RFID-Etikette an der Außenseite des Anhängers vorzusehen. Daher ist es vorteilhaft, wenn das von dem Drucker zu bedruckende Etikette über dem RFID-Etikette angeordnet ist. Unterhalb des RFID-Etikettes kann dann beispielsweise eine Wand des Anhängergehäuses vorgesehen sein.

Damit das mit einer codierten bzw. uncodierten Information hinsichtlich des Zielortes bedruckte Etikette von außen erkennbar ist, ist es weiterhin von Vorteil, wenn der Anhänger mit einem Lesefenster für dieses Etikette versehen ist.

Neben dem durch den Drucker zu bedruckenden ersten Etikette kann ein zweites Etikette vorgesehen sein, welches beispielsweise persönliche Daten in Form z.B. einer Business Card, aber auch Werbeinformationen beinhaltet und sowohl bei jedem Schreibvorgang auf das RFID-Etikette bzw. bei jedem Druckvorgang für das erste Etikette erstellt wird oder über einen längeren Zeitraum unverändert bleibt. Hierzu ist in dem Anhänger eine dritte Aufnahmeeinrichtung zur Aufnahme dieses zweiten Etikettes vorgesehen. Wie bereits darauf hingewiesen worden ist, kann dieses zweite Etikette für längere Zeit in dem Anhänger verbleiben oder beim Beschreiben des RFID-Etikettes neu erstellt und in die dritte Aufnahmeeinrichtung eingebracht werden.

Auch die dritte Aufnahmeeinrichtung kann ein von außen zugängliches Lesefenster aufweisen.

Um das RFID-Etikette gegen Beschädigung oder sonstige Beeinträchtigung zu schützen, kann weiterhin vorgesehen sein, daß die erste Aufnahmeeinrichtung für das RFID-Etikette zwischen der zweiten und der dritten Aufnahmeeinrichtung für das zu bedruckende erste und zweite Etikette angeordnet ist.

Die Aufnahmeinrichtungen können ganz unterschiedlich ausgestaltet sein. So besteht beispielsweise die Möglichkeit, daß die Aufnahmeeinrichtungen durch zwei einander gegenüberliegende Führungsschienen bzw. Führungsnuten gebildet sind, die die flächigen Etiketten C-förmig umgreifen. Hierdurch lassen sich die Etiketten auf einfache Weise aus dem Anhänger herausziehen bzw, dort hineinschieben. Um ein unbeabsichtigtes Herausnehmen des oder der Etiketten aus dem Anhänger zu vermeiden, kann darüber hinaus eine lösbare Verriegelungseinrichtung, beispielsweise ein Klettverschluß, ein Schnappverschluß usw. vorgesehen sein.

Damit der Anhänger an einem beliebigen zu transportierenden Gegenstand angebracht werden kann, ist es weiterhin von Vorteil, wenn das Befestigungsmittel lösbar ausgebildet ist.

Damit die sich in dem RFID-Etikette befindende Information nicht durch schlagartige elektrostatische Entladungen zerstört wird, ist es weiterhin von Vorteil, wenn das RFID-Etikette gegenüber dem Gehäuse elektrostatisch isoliert ist.

Darüber hinaus ist es von Vorteil, wenn das Gehäuse aus einem elektrisch nicht leitendem Material, vorzugsweise Kunststoff hergestellt ist.

Um ein Knicken des RFID-Etikettes zu vermeiden, ist es weiterhin von Vorteil, wenn das Gehäuse steif ausgebildet ist.

Das System zum Kennzeichnen eines zu transportierenden Gegenstandes wird durch die Merkmale des Anspruchs 19 gelöst. In den sich daran anschließenden Ansprüchen 20 bis 23 finden sich vorteilhafte Ausgestaltungen.

Das vorstehende System enthält im wesentlichen einen Drucker gemäß einem der Ansprüche 1 bis 6 und mindestens einen Anhänger gemäß der Ansprüche 7 bis 18. Bei diesem System treten hinsichtlich des Druckers und des Anhängers die bereits vorstehend erläuterten Vorteile auf. Es bleibt noch einmal anzumerken, daß durch das RFID-Etikette die Möglichkeit besteht, einen zu transportierenden Gegenstand, wie beispielsweise ein Gepäckstück, über einen längeren Zeitraum, d.h. über mehrere Transportvorgänge mit ein und demselben RFID-Etikette zu versehen, welches für jeden Transportvorgang mit der entsprechenden Zielinformation bzw. Teilen hiervon neu beschrieben werden kann.

Neben der in dem Drucker bereits vorsehbaren RFID-Leseeinheit, kann in dem System noch eine hiervon unabhängige RFID-Leseeinheit vorgesehen sein. Diese von dem Drucker unabhängige RFID-Leseeinheit dient dazu, die Fehlertreiheit eines RFID-Etikettes zu überprüfen, bevor dieses mit einer neuen Zielinformation beschrieben wird. Neben dieser von dem Drucker unabhängigen RFID-Leseeinheit können innerhalb des Systems mehrere Personen mit tragbaren RFID-Leseeinheiten versehen sein, die in der Lage sind, die Information, welche sich auf dem RFID-Etikette befindet, auszulesen und im Klartext, d.h. uncodiert für den Benutzer darzustellen. Hierdurch besteht die Möglichkeit, im Falle einer Störung oder einer sonstigen Beeinträchtigung die in dem RFID-Etikette enthaltene Information auszulesen und das Gepäckstück gegebenenfalls manuell an den Bestimmungsort zu transportieren.

Weiterhin hat es sich als vorteilhaft erwiesen, wenn das System eine Eingabe-/Ausgabeeinheit für einen Rechner enthält, mittels der die Zielinformation auf Basis von Eingangsinformationen aufbereitet und in eine entsprechende Codierform für das RFID-Etikette übertragen werden können. Hierbei erweist es sich weiterhin als vorteilhaft, wenn die Eingabe-/Ausgabeeinheit mit einer Leseeinheit für in magnetischer Form gespeicherten Daten versehen ist. Hierdurch besteht beispielsweise bei Flugreisen die Möglichkeit, das Flugticket, welches alle relevanten Informationen hinsichtlich Zielort, Flugnummer usw. enthält, automatisch einzulesen, diese Informationen in dem Rechner zu verarbeiten und anschließend das zugehörige RFID-Etikette des Gepäckstückes mit der jeweiligen Information zu versehen.

Das vorstehende Verfahren wird gemäß den Merkmalen des Anspruchs 24 gelöst. In den sich daran anschließenden Ansprüchen 25 bis 29 finden sich vorteilhafte Ausgestaltungen hierzu.

Grundsätzlich ist zu bemerken, daß sich mit dem Verfahren die gleichen Vorteile erzielen lassen, wie sie vorstehend im Zusammenhang mit der Verwendung eines RFID-Etikettes, dem Drucker, dem Anhänger und dem System erzielt worden sind.

Weitere vorteilhafte Ausgestaltungen sowie ein Ausführungsbeispiel der Erfindung werden nachstehend anhand der Zeichnungsfiguren erläutert. In diesem Zusammenhang ist darauf hinzuweisen, daß die verwendeten Begriffe "links", "rechts", "unten" und "oben" sich auf die Zeichnungsfiguren mit normal lesbarer Figurenbezeichung beziehen. Hierbei ist:
- Fig. 1: eine schematische Übersicht der einzelnen Bestandteile eines erfindungsgemäßen Systems;
- Fig. 2: eine schematische Querschnittsansicht eines erfindungsgemäßen Druckers; und
- Fig. 3A-3D: perspektivische, teilweise geschnittene Ansichten eines erfindungs- gemäßen Anhängers.

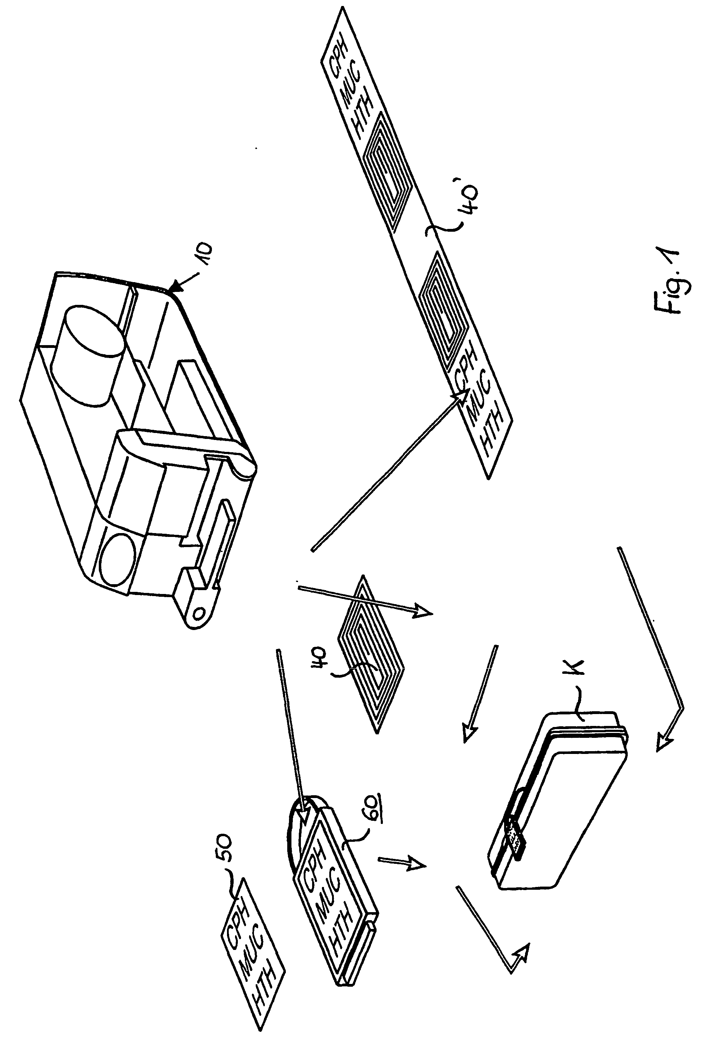

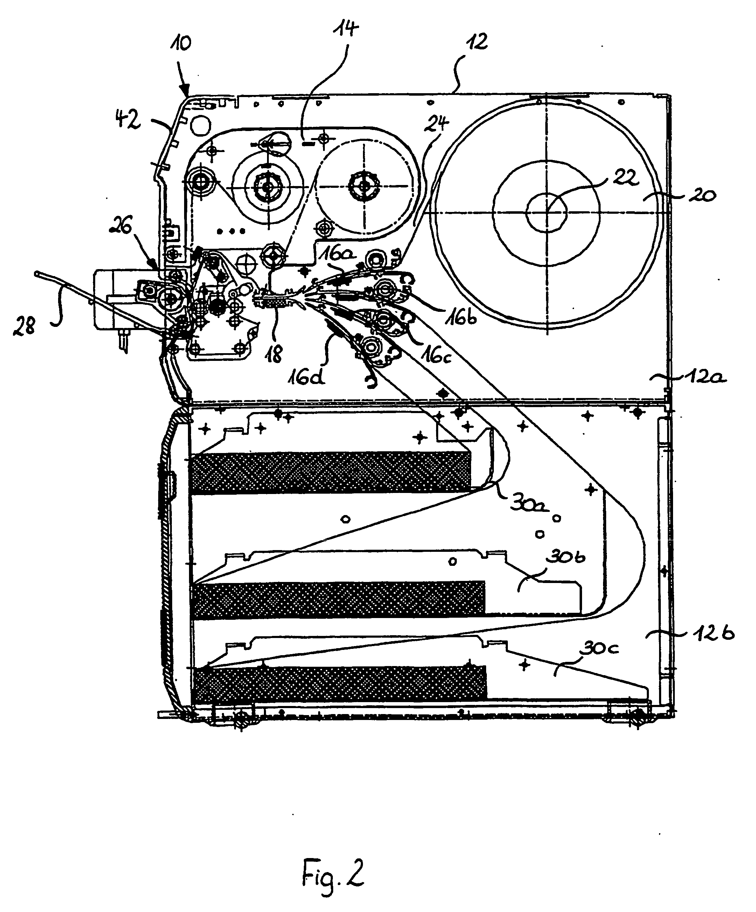

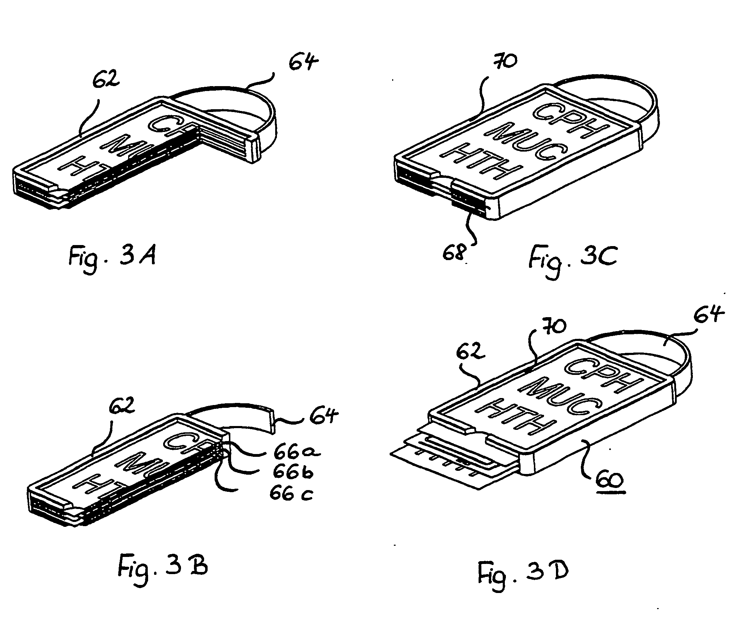

In Fig. 1 sind wesentliche Bestandteile des erfindungsgemäßen Systems wiedergegeben. Ein Drucker 10, der in Fig. 1 lediglich schematisch wiedergegeben ist und nachstehend im Zusammenhang mit der Fig. 2 näher erläutert wird, ist in der Lage, sowohl ein RFID-Etikette 40 als auch ein zu bedruckendes Etikette 50 mit der jeweiligen Zielinformation in uncodierter und/oder codierter Form auszugeben. Wie aus dem Stand der Technik bekannt kann der Drucker 10 auch eine Kombination aus einem RFID-Etikette und einem zu bedruckenden Etikette mit einer Zielinformation in uncodierter und/oder codierter Form erstellen, wie es in Fig. 1 rechts mit dem streifenförmigen RFID-Etikette 40' gezeigt ist. In diesem Fall können die beiden Enden des Streifens 40' auf der nicht dargestellten Seite mit einer Klebebeschichtung versehen sein, mittels der diese Enden nach Durchführen des Streifens 40' durch eine Öse und dergleichen an dem zu transportierenden Gegenstand miteinander verklebt werden, so daß das streifenförmige Etikette 40' an dem Gegenstand angebracht ist. Diese Klebebeschichtungen können mittels geeigneter Folien geschützt sein, die beim dem Verkleben der Enden von diesem abgezogen werden.

Das RFID-Etikette 40 und das zu bedruckende bzw. bedruckte Etikette mit Zielinformationen in codierter und/oder uncodierter Form können von einem Anhänger 60 aufgenommen werden, der an einem zu transportierenden Gegenstand, hier ein Gepäckstück in Form eines Koffers K angebracht wird, beispielsweise am Griff des jeweiligen Gepäckstückes K. Ist das Gepäckstück K bereits mit einem Anhänger 60 versehen, der zumindest ein RFID-Etikette 40 aufnimmt, so muß der Drucker 10 kein neues RFID-Etikette 40 ausgeben, sondern lediglich mittels einer geeigneten Schreib-/Leseeinheit für RFID-Etiketten, die nachstehend noch näher erläutert wird, versehen sein. Gelangt das Gepäckstück K in die Nähe des Druckers 10 bzw. einer separat hiervon vorgesehenen Schreib- und/oder Leseeinheit für RFID-Etiketten, so kann hierdurch das RFID-Etikette 40 mit neuen Zielinformationen beschrieben werden bzw. von dem RFID-Etikette ausgelesen werden. Ist jedoch das Gepäckstück K nicht mit einem RFID-Etikette 40 versehen oder ist das vorhandene RFID-Etikette 40 fehlerhaft, so kann der Drucker 10 ein neues RFID-Etikette 40 ausgeben, welches mittels des Druckers 10 mit der entsprechenden Zielinformation beschrieben und nach dessen Ausgabe aus dem Drucker 10 in dem Anhänger 60 aufgenommen wird.

Es ist zu bemerken, daß es sich bei dem RFID-Etikette 40 bzw. 40' um vorzugsweise ein passives RFID-Etikette handelt, d.h., daß es keine eigene Energieversorgung besitzt. Der Schreib- bzw. Lesevorgang wird entweder induktiv oder mittels Radiowellen vorgenommen, die von der Schreib-/Leseeinheit gesendet bzw. empfangen werden.

Der in Fig. 2 gezeigte erfindungsgemäße Drucker 10 weist zunächst ein Gehäuse 12 auf, in dem die einzelnen Bestandteile des Druckers, die nachstehend noch näher erläutert werden, aufgenommen sind. Wie aus Fig. 2 hervorgeht, kann das Gehäuse 12 zweiteilig ausgeführt sein, nämlich in ein oberes Gehäuse 12a und in ein unteres Gehäuse 12b. Selbstverständlich ist jede andere Aufteilung ebenfalls denkbar.

Im oberen Gehäuse 12a ist im linken Bereich eine Druckeinheit 14 zum Bedrucken von zumindest einem Etikette angeordnet, das von der Druckeinheit 14 mit wenigstens Zielinformationen in codierter und/oder uncodierter Form für den zu transportierenden Gegenstand bedruckt werden. Die Druckeinheit 14 kann nach jedem beliebigen Druckverfahren arbeiten. In dem dargestellten Ausführungsbeispiel ist bevorzugt, daß die Druckeinheit 14 nach dem Thermotransfer-Druckverfahren arbeitet. Neben den Etiketten kann die Druckeinheit 14 auch andere Dokumente bedrucken bzw. erstellen.

Die zu bedruckenden Etiketten bzw. das zu bedruckende Material wird über insgesamt 4 voneinander getrennte Zuführschächte 16a bis 16d der Druckeinheit 14 zugeführt. Die Zuführschächte 16a bis 16d weisen einen üblichen Aufbau auf und werden daher nicht näher erläutert. Es sei nur angemerkt, daß die Zuführschächte 16a bis 16d fächerartig übereinander so angeordnet sind, daß ihre nicht näher bezeichneten Austrittsmündungen für das jeweils zu zuführende Material so ausgerichtet sind, daß dieses Material einer gemeinsamen Bahn folgen kann, wenn es die jeweilige Zuführeinrichtung 16a bis 16d verlassen hat.

Zwischen den Zuführschächten 16a bis 16d und der Druckeinheit 14 ist eine Schreib-/Leseeinheit 18 für ein RFID-Etikette angeordnet. Wie aus Fig. 2 hervorgeht, ermöglicht die Ausrichtung der Zuführschächte 16a bis 16d und die Anordnung der Schreib-/Leseeinheit 18 für das RFID-Etikette, dieses Etikette sowohl in Rollenform als auch in Form eines zieharmonikaartig gefalteten Blockes im unteren Gehäuse 12b des Druckers 10 anzuordnen, da sämtliche durch die Zuführeinrichtungen 16a bis 16d bestimmten Zuführwege in einer gemeinsamen Förderbahn münden , die durch die Schreib-/Leseeinheit 18 zu der Druckeinheit 14 hindurchführt.

In dem vorliegenden Ausführungsbeispiel ist in dem oberen Gehäuse 12a eine Etikettenrolle 20 angeordnet, die über eine sich horizontal erstreckende Achse 22 drehbar in dem oberen Gehäuse 12a gelagert ist. Von der Etikettenrolle 20 kann eine Etikettenbahn 24 über den ersten Zuführschacht 16a und die Schreib-/Leseeinheit 18 für das RFID-Etikette der Druckeinheit 14 bzw. dem Druckkopf der Druckeinheit 14 zugeführt und dort bedruckt werden. Nach dem Druckvorgang wird das Etikette durch eine in Zuführrichtung nach der Druckeinheit 14 vorgesehene Messereinheit 26 von der Etikettenbahn 24 abgetrennt und über eine nicht näher bezeichnete Spendeöffnung in dem oberen Gehäuse 12a auf eine außerhalb des oberen Druckergehäuses 12a angeordnete Ablagefläche 28 abgelegt. Damit das bedruckte Etikette nicht herabfällt, kann die Ablagefläche 28 schräg nach oben verlaufend ausgerichtet sein.

Wie weiterhin aus Fig. 2 hervorgeht, sind in dem unteren Gehäuse 12b übereinander drei Kassetten 30a bis 30c in der Weise angeordnet, daß sie zu bedruckendes bzw. zu beschreibendes Material in zieharmonikaartig gefalteter Weise in der jeweiligen Kassette 30a bis 30c aufnehmen. Wie bereits vorher darauf hingewiesen worden ist, kann das RFID-Etikette entweder in Rollenform oder in zieharmonikaartig gefalteter Form vorliegen.

Die einzelnen Kassetten 30a bis 30c sind aus dem unteren Gehäuse 1 2b entweder einzeln oder aber gemeinsam herausziehbar und können so wieder neu befüllt werden.

Es ist noch zu bemerken, daß der Drucker 10 weiterhin ein Bedienfeld 42 aufweist, welches am linken oberen Rand des oberen Gehäuses 12a vorgesehen ist und die üblichen Bedienelemente sowie Anzeigeeinrichtungen enthält. Gegebenenfalls können zusätzlich Bedienelemente und Anzeigeeinrichtungen für die Schreib-/Leseeinheit 18 für das RFID-Etikette 40, 40' vorgesehen sein, so daß die auf das RFID-Etikette 40, 40' zu schreibenden Informationen direkt über den Drucker 10 eingegeben und von dem Drucker 10 ausgelesen sowie angezeigt werden können.

In den Figuren 3A bis 3D ist ein erfindungsgemäßer Anhänger 60 in teilweise geschnittener perspektivischer Ansicht gezeigt. Der Anhänger 60 weist ein Gehäuse 62 auf, das im wesentlichen einen rechteckförmigen, steifen Rahmen bildet. Das Gehäuse 62 ist aus einem nicht leitenden Kunststoff hergestellt, der das RFID-Etikette 40 gegen eine schlagartige elektrostatische Entladung, die von außen induziert wird, schützt. An der einen Stirnseite des rechteckförmigen Rahmens 62 sind Befestigungsmittel 64 vorgesehen, die im vorliegenden Ausführungsbeispiel durch einen einstückig an dem Rahmen 62 angeformten Bügel gebildet sind.

Selbstverständlich können die Befestigungsmittel 64 auch so ausgebildet sein, daß sie von dem rechteckförmigen Rahmen 62 lösbar und an diesem wieder verriegelbar sind, so daß der Anhänger 60 von einem zu transportierenden Gegenstand K abnehmbar bzw. an diesem anbringbar ist.

Der Rahmen 62 weist in seinem Inneren drei übereinanderliegende Aufnahmeeinrichtungen 66a bis 66c auf, die durch Nuten an drei Innenseiten des Rahmens 62 ausgebildet sind. Die Breite jeder Nut der Aufnahmeeinrichtungen 66a bis 66c ist so gewählt, daß ein Etikette 40, 50 eingeschoben werden kann.

An der den Befestigungsmitteln 64 gegenüberliegenden Stirnseite weist der rechteckförmige Rahmen 62 eine Öffnung 68 auf, durch die die Etiketten 40, 50 in die Aufnahmeeinrichtungen 66a bis 66c einschiebbar sind, wie es in Fig. 3D gezeigt ist. Um ein einzelnes Etikette 40, 50 herausziehen zu können, ist der rechteckförmige Rahmen 62 an dieser Stirnseite in seiner Mitte zumindest teilweise unterbrochen, so daß beispielsweise mittels eines Fingers eines der Etiketten 40, 50 herausgezogen werden kann.

Die Aufnahmeeinrichtungen 66a bis 66c sind so angeordnet, daß die mittlere, d.h. die erste Aufnahmeeinrichtung 66b, ein RFID-Etikette 40 aufnimmt, wogegen die beiden äußeren Aufnahmeeinrichtungen 66a, 66c, d.h. die zweite und dritte Aufnahmeeinrichtung 66a, 66c, jeweils ein durch die Druckeinheit 14 des erfindungsgemäßen Druckers 10 bedrucktes Etikette 50 aufnehmen. Der Rahmen 62 ist dabei so ausgestaltet, daß er an der Oberseite des Anhängers 60 ein Betrachtungsfenster 70 bildet, durch die die Etiketten 50, welche sich in der oberen und in der unteren Aufnahmeeinrichtung 66a, 66c befinden, von außen gelesen werden können. Selbstverständlich kann der rechteckförmige Rahmen 62 auch so ausgebildet sein, daß nur für eines der Etiketten 50, die sich in diesen beiden Aufnahmeinrichtungen 66a, 66c befinden, eine Betrachtung möglichen ist.

Wie aus den Fig. 3A bis 3D hervorgeht, ist in der oberen Aufnahmeeinrichtung 66a ein Etikette 50 mit Zielinformationen bezüglich des zu transportierenden Gegenstandes K eingeschoben, die in uncodierter Form auf dem Etikette 50 wiedergegeben sind. Selbstverständlich kann dort auch ein Etikette mit Zielinformationen in codierter Form, beispielsweise in Form eines Barcodes vorgesehen sein.

Die Arbeitsweise des erfindungsgemäßen Systems bzw. das erfindungsgemäße Verfahren wird anhand eines Beispiels bezüglich eines Flugreisenden erläutert: Der Flugreisende, der bereits ein Flugticket besitzt, begibt sich zunächst zu einem Check-In-Schalter. Dort weist er sein Ticket vor und stellt ein Gepäckstück K auf eine Waage an diesem Schalter. Es sei zunächst angenommen, daß das Gepäck K bereits mit einem RFID-Etikette 40 versehen ist, das in dem Anhänger 60 aufgenommen ist. Die in dem Drucker 10 vorgesehene Schreib-/Leseeinheit 18 bzw. eine gegebenenfalls getrennt hiervon vorgesehene Leseeinheit für RFID-Etiketten 40 prüft zunächst, ob das RFID-Etikette 40 funktionstüchtig ist. Falls dies zutrifft, werden die durch das Einlesen des Tickets bereits ermittelten Daten an das RFID-Etikette 40 mittels Radiowellen durch vorzugsweise eine getrennt von dem Drucker 10 vorgesehene Schreib- und/oder Leseeinheit für RFID-Etiketten übertragen. Gleichzeitig hiermit, oder kurz vorher oder kurz nachher, wird mittels des Druckers 10 eine Boardingcard und ein weiteres Etikette 50 ausgedruckt, wobei letzteres ebenfalls Zielinformationen in codierter, d.h. in Form eines Barcodes, und/oder in uncodierter Form, d.h. in Klartext, enthält. Dieses Etikette 50 wird in die zweite Aufnahmeeinrichtung 66b des Anhängers 60 eingeschoben. Gegebenenfalls kann noch ein weiteres Etikette durch den Drucker 10 erstellt werden, das persönliche Daten usw. des Flugreisenden enthält und in die dritte Aufnahmeeinrichtung 66c eingeschoben wird. Anschließend kann das Gepäckstück K mittels eines Fördersystems zu dem jeweiligen Flugzeug gebracht werden, wobei der Fördervorgang durch die in dem RFID-Etikette 40 enthaltenen Daten gesteuert wird, die an Weichen usw. ausgelesen und gegebenenfalls ergänzt werden.

Stellt sich bei der Funktionalitätsprüfung des RFID-Etikettes 40, welches sich bereits an dem Gepäckstück K befindet, heraus, daß dieses nicht mehr funktionstüchtig ist, so gibt der Drucker 10 unmittelbar ein neues RFID-Etikette 40 aus, das mittels der Schreib-/Leseeinheit 18 für RFID-Etiketten 40 in dem Drucker 10 mit den Zielinformationen beschrieben worden ist. Dieses RFID-Etikette 40 wird dann in die mittlere bzw. zweite Aufnahmeeinrichtung 66a des Anhängers 60 durch eine Bedienperson eingeschoben. Anschließend wird der bereits beschriebene Vorgang fortgesetzt.

Ist an dem Gepäckstück K noch kein RFID-Etikett 40 mittels eines Anhängers 60 oder mittels einer sonstigen geeigneten Vorrichtung angebracht, so kann der Drucker 10 wie im Falle eines fehlerhaften RFID-Etikettes 40 ein neues RFID-Etikette 40 ausgeben, das zumindest teilweise mit den Zielinformationen für das Gepäckstück K beschrieben worden ist, und anschließend mittels eines geeigneten Anhängers 60 an dem Gepäckstück K angebracht werden.

Abschließend ist noch zu bemerken, daß das RFID-Etikette 40, 40' bzw. das durch die Druckeinheit 14 des Druckers 10 bedruckte Etikette 50 neben den Zielinformationen für das Gepäckstück K weitere Informationen enthalten kann.

## Patentansprüche

1. Drucker zum Erstellen von zumindest Etiketten als Zielinformationsträger für einen zu transportierenden Gegenstand, insbesondere einem Gepäckstück, enthaltend:
- wenigstens eine Druckeinheit (14) zum Bedrucken eines Etikettes (50) mit zumindest Zielinformationen für den zu transportierenden Gegenstand (K) in codierter und/oder uncodierter Form,
- einen ersten Zuführschacht (16a) zum Zuführen des Etikettes (50) zu der Druckeinheit (14),
- eine Schreibeinheit (18) zum Beschreiben eines RFID-Etikettes (40, 40') mit zumindest Zielinformationen für den zu transportierenden Gegenstand (K), und
- einen zweiten Zuführschacht (16b) zum Zuführen des durch die Schreibeinheit (18) zu beschreibende RFID-Etikette (40),
wobei der erste Zuführschacht (16a) mit einer Vorratseinheit (20) für zu bedruckende Etiketten (50) und der zweite Zuführschacht (16b) mit einer Vorratseinheit für zu beschreibende RFID-Etiketten(40) verbunden ist.

2. Drucker nach Anspruch 1,
**dadurch gekennzeichnet, dass** eine Leseeinheit (18) für ein RFID-Etikette (40) vorgesehen ist

3. Drucker nach Anspruch 1 oder 2,
**dadurch gekennzeichnet, dass** zumindest die Leseeinheit (18) für das RFID-Etikette (40) in Zuführrichtung der Etiketten (40, 40', 50) vor der Druckeinheit (14) angeordnet ist.

4. Drucker nach einem der Ansprüche 1 bis 3,
**dadurch gekennzeichnet, dass** neben dem ersten und dem zweiten Zuführschacht (16a, 16b) noch wenigstens ein weiterer Zuführschacht (16c) zum Zuführen eines durch die Druckeinheit (14) zu bedruckenden Etiketts vorgesehen ist.

5. Drucker nach einem der Ansprüche 1 bis 4,
**dadurch gekennzeichnet, dass** eine Leseeinheit für Smartcards vorgesehen ist.

6. Drucker nach einem der Ansprüche 1 bis 5,
**dadurch gekennzeichnet, dass** eine Schreibeinheit für Smartcards vorgesehen ist.

7. Anhänger für einen zu transportierenden Gegenstand, insbesondere für ein Gepäckstück, enthaltend:
- wenigstens ein Gehäuse (62) zum Aufnehmen von mindestens zwei Etiketten (40, 50),
- Befestigungsmittel (64) zum Anbringen des Gehäuses (62) an dem zu transportierenden Gegenstand (K),
- eine in dem Gehäuse (62) vorgesehene erste Aufnahmeeinrichtung (66a), in die ein RFID-Etikette (40) aufgenommen ist, und eine zweite Aufnahmeeinrichtung (66b) für ein Etikette (50) mit einer gedruckten Information in codierter und/oder uncodierter Form.

8. Anhänger nach Anspruch 7,
**dadurch gekennzeichnet, dass** die zweite Aufnahmeeinrichtung (66b) über der ersten Aufnahmeeinrichtung (66a) angeordnet ist.

9. Anhänger nach Anspruch 7 oder 8,
**dadurch gekennzeichnet, dass** die zweite Aufnahmeeinrichtung (66b) ein Lesefenster (70) aufweist.

10. Anhänger nach einem der Ansprüche 7 bis 9,
**dadurch gekennzeichnet, dass** eine dritte Aufnahmeeinrichtung (66c) für ein weiteres Etikette mit gedrudcter Information in codierter und/oder uncodierter Form vorgesehen ist.

11. Anhänger nach Anspruch 10,
**dadurch gekennzeichnet, dass** die dritte Aufnahmeeinrichtung (66c) ein von außen zugängliches Lesefenster aufweist.

12. Anhänger nach Anspruch 10 oder 11,
**dadurch gekennzeichnet, dass** die erste Aufnahmeeinrichtung (66a) zwischen der zweiten und der dritten Aufnahmeeinrichtung (66b, 66c) angeordnet ist.

13. Anhänger nach einem der Ansprüche 10 bis 12,
**dadurch gekennzeichnet, dass** die erste, zweite und dritte Aufnahmeeinrichtung (66a-66c) durch jeweils zwei einander gegenüberliegende Führungsnuten gebildet ist, die die Etiketten (40, 50) an deren Rändern C-förmig umgreifen.

14. Anhänger nach einem der Ansprüche 7 bis 13,
**dadurch gekennzeichnet, dass** die Etiketten auswechselbar in den Aufnahmeeinrichtungen (66a-66c) angeordnet sind.

15. Anhänger nach einem der Ansprüche 7 bis 14,
**dadurch gekennzeichnet, dass** die Befestigungsmittel (64) lösbar ausgebildet sind.

16. Anhänger nach einem der Ansprüche 7 bis 8,
**dadurch gekennzeichnet, dass** das RFID-Etikette (40) gegenüber einer elektrostatischen Entladung isoliert ist.

17. Anhänger nach einem der Ansprüche 7 bis 16,
**dadurch gekennzeichnet, dass** das Gehäuse (62) aus einem elektrisch nichtleitendem Material, vorzugsweise Kunststoff hergestellt ist.

18. Anhänger nach einem der Ansprüche 7 bis 17,
**dadurch gekennzeichnet, dass** das Gehäuse (62) steif ausgebildet ist.

19. System zum Kennzeichnen eines zu transportierenden Gegenstandes, insbesondere eines Gepäckstückes, mit seinem Zielort, enthaltend:
- einen Drucker (10) gemäß einem der Ansprüche 1 bis 6, und
- mindestens einen Anhänger (60) gemäß einem der Ansprüche 7 bis 18.

20. System nach Anspruch 19,
**dadurch gekennzeichnet, dass** getrennt von dem Drucker (10) eine RFID-Schreib- und/oder Leseeinheit vorgesehen ist, die bei Erkennen eines RFID-Etikettes (40) dessen Fehlerfreiheit erfaßt

21. System nach Anspruch 20,
**dadurch gekennzeichnet, dass** die RFID-Schreib- und/oder Leseeinheit tragbar ist.

22. System nach einem der Ansprüche 19 bis 21,
**dadurch gekennzeichnet, dass** der Drucker (10) mit einer Eingabe-/Ausgabeeinheit eines Rechners verbunden ist.

23. System nach Anspruch 22,
**dadurch gekennzeichnet, dass** die Eingabe-/Ausgabeeinheit eine Einheit zum Lesen codierter Informationen enthält, die in einem Speicher gespeichert sind.

24. Verfahren zum Kennzeichnen eines zu transportierenden Gegenstandes, insbesondere eines Gepäckstückes, mit seinem Zielort, enthaltend die folgenden Schritte:
- Versehen des zu transportierenden Gegenstandes mit einem RFID-Etikette,
- Einschreiben wenigstens der Zielortinformationen in das RFID-Etikette und
- Versehen des Gegenstandes mit mindestens einem weiteren Etikette, auf dem wenigstens die Zielinformationen in codierter und/oder uncodierter Form aufgedruckt sind.

25. Verfahren nach Anspruch 24,
bei dem das RFID-Etikette nach Erreichen des Zielortes an dem Gegenstand verbleibt.

26. Verfahren nach Anspruch 24 oder 25,
wobei bei einem mit einem RFID-Etikette bereits versehenen Gegenstand vor dem Beschreiben des RFID-Etikettes das RFID-Etikette auf Fehlerfreiheit überprüft wird. ,

27. Verfahren nach einem der Ansprüche 24 bis 26,
wobei bei einem fehlerhaften RFID-Etikette ein neues RFID-Etikette durch ein Ausgabegerät ausgegeben wird, das bereits mit den entsprechenden Zielinformationen versehen ist.

28. Verfahren nach einem der Ansprüche 24 bis 27,
bei dem vor oder nach dem Beschreiben des RFID-Etikettes mindestens ein Etikette, welches Zielinformationen in codierter und/oder uncodierter Form enthält, für den zu transportierenden Gegenstand gedruckt und ausgegeben wird.

29. Verfahren nach einem der Ansprüche 24 bis 28,
bei dem das RFID-Etikette und das wenigstens eine bedruckte Etikette in einem Anhänger, der an dem zu transportierenden Gegenstand anbringbar ist, aufgenommen werden.

## Claims

1. A printer for preparing at least labels as destination information carriers for an article to be transported, in particular a piece of baggage, including:
- at least one printing unit (14) for printing a label (50) with at least items of destination information for the article (K) to be transported in encoded and/or uncoded form,
- a first feed shaft (16a) for feeding the label (50) to the printing unit (14),
- a writing unit (18) for writing an RFID label (40, 40') with at least items of destination information for the article (K) to be transported, and
- a second feed shaft (16b) for feeding the RFID label (40) to be written by the writing unit (18),
wherein the first feed shaft (16a) is connected to a supply unit (20) for the labels (50) to be printed and the second feed shaft (16b) is connected to a supply unit for RFID labels (40) to be written to.

2. A printer as set forth in claim 1 **characterised in that** there is provided a reading unit (18) for an RFID label (40).

3. A printer as set forth in claim 1 or claim 2 **characterised in that** at least the reading unit (18) for the RFID label (40) is arranged upstream of the printing unit (14) in the feed direction of the labels (40, 40', 50).

4. A printer as set forth in one of claims 1 through 3 **characterised in that** besides the first and the second feed shaft (16a, 16b) there is also provided at least one further feed shaft (16c) for feeding a label to be printed by the printing unit (14).

5. A printer as set forth in one of claims 1 through 4 **characterised in that** there is provided a reading unit for smart cards.

6. A printer as set forth in one of claims 1 through 5 **characterised in that** there is provided a writing unit for smart cards.

7. A tag for an article to be transported, in particular for a piece of baggage, including:
- at least one casing (62) for receiving at least two labels (40, 50),
- fixing means (64) for attaching the casing (62) to the article (K) to be transported, and
- a first receiving device (66a) which is provided in the casing (62) and in which an RFID label (40) is received, and a second receiving device (66b) for a label (50) with printed information in encoded and/or uncoded form.

8. A tag as set forth in claim 7 **characterised in that** the second receiving device (66b) is arranged over the first receiving device (66a).

9. A tag as set forth in claim 7 or claim 8 **characterised in that** the second receiving device (66b) has a reading window (70).

10. A tag as set forth in one of claims 7 through 9 **characterised in that** there is provided a third receiving device (66c) for a further label with printed information in encoded and/or uncoded form.

11. A tag as set forth in claim 10 **characterised in that** the third receiving device (66c) has a reading window which is accessible from the exterior.

12. A tag as set forth in claim 10 or claim 11 **characterised in that** the first receiving device (66a) is arranged between the second and the third receiving devices (66b, 66c).

13. A tag as set forth in one of claims 10 through 12 **characterised in that** the first, second and third receiving devices (66a-66c) are each formed by two respective mutually opposite guide grooves which embrace the labels (40, 50) at the edges thereof in a C-shape.

14. A tag as set forth in one of claims 7 through 13 **characterised in that** the labels are arranged replaceably in the receiving devices (66a-66c).

15. A tag as set forth in one of claims 7 through 14 **characterised in that** the fixing means (64) are adapted to be releasable.

16. A tag as set forth in one of claims 7 through 8 **characterised in that** the RFID label (40) is insulated in relation to an electrostatic discharge.

17. A tag as set forth in one of claims 7 through 16 **characterised in that** the casing (62) is made from an electrically non-conductive material, preferably plastic material.

18. A tag as set forth in one of claims 7 through 17 **characterised in that** the casing (62) is stiff.

19. A system for labeling an article to be transported, in particular a piece of baggage, with its destination, including:
- a printer (10) as set forth in one of claims 1 through 6, and
- at least one tag (60) as set forth in one of claims 7 through 18.

20. A system as set forth in claim 19 **characterised in that** provided separately from the printer (10) is an RFID label writing and/or reading unit which upon recognition of an RFID label (40) detects the freedom from fault thereof.

21. A system as set forth in claim 20 **characterised in that** the RFID writing and/or reading unit is portable.

22. A system as set forth in one of claims 19 through 21 **characterised in that** the printer (10) is connected to an input/output unit of a computer.

23. A system as set forth in claim 22 **characterised in that** the input/output unit includes a unit for reading encoded information stored in a memory.

24. A method of labeling an article to be transported, in particular a piece of baggage, with its destination, including the following steps:
- providing the article to be transported with an RFID label,
- writing at least the items of destination information into the RFID label, and
- providing the article with at least a further label on which at least the items of destination information are printed in encoded and/or uncoded form.

25. A method as set forth in claim 24 wherein the RFID label remains on the article after reaching the destination.

26. A method as set forth in claim 24 or claim 25 wherein in the case of an article already provided with an RFID label the RFID label is checked for freedom from fault prior to writing of the RFID label.

27. A method as set forth in one of claims 24 through 26 wherein in the case of a defective RFID label a new RFID label is dispensed by a dispensing device, already provided with the corresponding items of destination information.

28. A method as set forth in one of claims 24 through 27 wherein prior to or after writing of the RFID label at least one label which contains items of destination information in encoded and/or uncoded form is printed and dispensed for the article to be transported.

29. A method as set forth in one of claims 24 through 28 wherein the RFID label and the at least one printed label are received in a tag which can be attached to the article to be transported.

## Revendications

1. Imprimante pour réaliser au moins des étiquettes en tant que support d'informations de destination pour un objet à transporter, en particulier un bagage, comprenant :
- au moins une unité d'impression (14) pour imprimer une étiquette (50) avec au moins des informations de destination pour l'objet à transporter (K) selon une forme codée et/ou non codée,
- un premier bac d'alimentation (16a) pour amener l'étiquette (50) à l'unité d'impression (14),
- une unité d'écriture (18) pour écrire sur une étiquette d'identification par radiofréquence ou RFID (40, 40') au moins des informations de destination pour l'objet à transporter (K), et
- un deuxième bac d'alimentation (16b) pour amener l'étiquette RFID (40) sur laquelle l'unité d'écriture (18) doit écrire quelque chose, moyennant quoi le premier bac d'alimentation (16a) est relié à une unité d'approvisionnement (20) en étiquettes à imprimer (50) et le deuxième bac d'alimentation (16b) est relié à une unité d'approvisionnement en étiquettes RFID (40) à munir d'une écriture.

2. Imprimante selon la revendication 1, **caractérisée en ce qu'**une unité de lecture (18) pour une étiquette RFID (40) est prévue.

3. Imprimante selon la revendication 1 ou 2, **caractérisée en ce qu'**au moins l'unité de lecture (18) pour l'étiquette RFID (40) est agencée devant l'unité d'impression (14) dans la direction d'alimentation des étiquettes (40, 40', 50).

4. Imprimante selon l'une des revendications 1 à 3, **caractérisée en ce qu'**à côté du premier bac d'alimentation et du deuxième bac d'alimentation (16a, 16b) est prévu encore au moins un autre bac d'alimentation (16c) pour amener une étiquette devant être imprimée par l'unité d'impression (14).

5. Imprimante selon l'une des revendications 1 à 4, **caractérisée en ce qu'**une unité de lecture pour des cartes à puce est prévue.

6. Imprimante selon l'une des revendications 1 à 5, **caractérisée en ce qu'**une unité d'écriture pour des cartes à puce est prévue.

7. Etiquette à attacher pour un objet à transporter, en particulier pour un bagage, comprenant :
- au moins un boîtier (62) pour recevoir au moins deux étiquettes (40, 50),
des moyens de fixation (64) pour fixer le boîtier (62) à l'objet à transporter (K),
un premier dispositif de réception (66a) prévu dans le boîtier (62), dans lequel une étiquette RFID (40) est placée et un deuxième dispositif de réception (66b) pour une étiquette (50) avec une information imprimée selon une forme codée et/ou non codée.

8. Etiquette à attacher selon la revendication 7, **caractérisée en ce que** le deuxième dispositif de réception (66b) est agencé au-dessus du premier dispositif de réception (66a).

9. Etiquette à attacher selon la revendication 7 ou 8, **caractérisée en ce que** le deuxième dispositif de réception (66b) présente une fenêtre de lecture (70).

10. Etiquette à attacher selon l'une des revendications 7 à 9, **caractérisée en ce qu'**un troisième dispositif de réception (66c) pour une autre étiquette avec une information imprimée selon une forme codée et/ou non codée est prévu.

11. Etiquette à attacher selon la revendication 10, **caractérisée en ce que** le troisième dispositif de réception (66c) présente une fenêtre de lecture accessible de l'extérieur.

12. Etiquette à attacher selon la revendication 10 ou 11, **caractérisée en ce que** le premier dispositif de réception (66a) est agencé entre le deuxième et le troisième dispositif de réception (66b, 66c).

13. Etiquette à attacher selon l'une des revendications 10 à 12, **caractérisée en ce que** les premier, deuxième et troisième dispositifs de réception (66a-66c) sont chacun constitués par deux rainures de guidage opposées l'une à l'autre, qui entourent en forme de C les étiquettes (40, 50) au niveau de leurs bords.

14. Etiquette à attacher selon l'une des revendications 7 à 13, **caractérisée en ce que** les étiquettes sont agencées de manière à pouvoir être échangées dans les dispositifs de réception (66a-66c).

15. Etiquette à attacher selon l'une des revendications 7 à 14, **caractérisée en ce que** les moyens de fixation (64) sont conçus de manière à pouvoir être détachés.

16. Etiquette à attacher selon la revendication 7 ou 8, **caractérisée en ce que** l'étiquette RFID (40) est isolée par rapport à une décharge électrostatique.

17. Etiquette à attacher selon l'une des revendications 1 à 16, **caractérisée en ce que** le boîtier (62) est fabriqué dans un matériau non électroconducteur, de préférence de la matière synthétique.

18. Etiquette à attacher selon l'une des revendications 7 à 17, **caractérisée en ce que** le boîtier (62) est conçu de manière à être rigide.

19. Système d'identification d'un objet à transporter, en particulier un bagage, avec un lieu de destination, comprenant :
- une imprimante (10) selon l'une des revendications 1 à 6, et
- au moins une étiquette à attacher (60) selon l'une des revendications 7 à 18.

20. Système selon la revendication 19, **caractérisé en ce qu'**une unité d'écriture et/ou de lecture RFID est prévue séparément de l'imprimante (10), laquelle détecte que l'étiquette RFID (40) ne présente aucun défaut lorsqu'elle la reconnaît.

21. Système selon la revendication 20, **caractérisé en ce que** l'unité d'écriture et/ou de lecture RFID est portable.

22. Système selon l'une des revendications 19 à 21, **caractérisé en ce que** l'imprimante (10) est reliée à une unité d'entrée/de sortie d'un ordinateur.

23. Système selon la revendication 22, **caractérisé en ce que** l'unité d'entrée/de sortie comprend une unité pour la lecture d'informations codées, qui sont sauvegardées dans une mémoire.

24. Procédé d'identification d'un objet à transporter, en particulier un bagage, avec un lieu de destination, comprenant les étapes suivantes :
- munir l'objet à transporter d'une étiquette RFID,
- inscription d'au moins les informations de destination sur l'étiquette RFID, et
- munir l'objet d'au moins une autre étiquette, sur laquelle au moins les informations de destination sont imprimées selon une forme codée et/ou non codée.

25. Procédé selon la revendication 24, pour lequel l'étiquette RFID reste sur l'objet après qu'il a atteint le lieu de destination.

26. Procédé selon la revendication 24 ou 25, moyennant quoi pour un objet déjà doté d'une étiquette RFID, l'absence de défaut de l'étiquette RFID est vérifiée avant que l'étiquette RFID ne reçoive une inscription.

27. Procédé selon l'une des revendications 24 à 26, moyennant quoi lorsque l'étiquette RFID présente des défauts, une nouvelle étiquette RFID est imprimée par une unité de sortie, qui possède déjà les informations de destination relevantes.

28. Procédé selon l'une des revendications 24 à 27, selon lequel avant ou après l'inscription de l'étiquette RFID, au moins une étiquette, qui comprend des informations de destination selon une forme codée et/ou non codée, est imprimée et délivrée pour l'objet à transporter.

29. Procédé selon l'une des revendications 24 à 28, selon lequel l'étiquette RFID et la au moins une étiquette imprimée peuvent être placées dans une étiquette à attacher, qui peut être fixée sur l'objet à transporter.
